# EUROPÄISCHE PATENTSCHRIFT

(11) **EP 3 626 052 B1**
(45) Veröffentlichungstag und Bekanntmachung des Hinweises auf die Patenterteilung: **14.07.2021**
(21) Anmeldenummer: 19197948.3
(22) Anmeldetag: 18.09.2019
(51) Int. Cl.: A01K 1/01

(54) **VERLAGERUNGSANLAGE, INSBESONDERE ENTMISTUNGSSCHIEBER, FÜR EINEN STALL**
DISPLACEMENT INSTALLATION, IN PARTICULAR MANURE SLIDE, FOR A STALL
INSTALLATION DE DÉPLACEMENT, EN PARTICULIER RACLEUR D'ENLÈVEMENT DU FUMIER, POUR UNE STABLE

(30) Priorität: 19.09.2018 AT 507992018
(43) Veröffentlichungstag der Anmeldung: 25.03.2020
(73) Patentinhaber: Schauer Agrotronic GmbH, 4731 Prambachkirchen (AT)
(72) Erfinder: SCHÖNBAUER, Hubert, 4722 Peuerbach (AT)
(74) Vertreter: Burger, Hannes

(56) Entgegenhaltungen:
- EP-A1- 0 841 003
- EP-A1- 1 557 082
- WO-A2-2019/160480
- SE-A1- 0 901 570

## Beschreibung

Die Erfindung betrifft eine Verlagerungsanlage, insbesondere eine Räumungsanlage und/oder Entmistungsanlage, für einen Stall zur Verlagerung von auf einer Bodenfläche zwischenzeitlich abgelagerten Gegenständen, wie Kot der Tiere, Restfutter, Streumittel.

Die EP 1 557 082 A1 beschreibt eine gattungsgemäß ausgebildete Reinigungseinrichtung für Rinderställe. Die Reinigungseinrichtung umfasst einen Räumschieber, der über einen Seilzug mittels eines Antriebs entlang eines Kotgangs bewegt wird. Eine Steuereinrichtung dient zur Steuerung der Bewegung des Räumschiebers in Vorwärts- und Rückwärtsrichtung. Der Antrieb für den Seilzug ist vom Räumschieber räumlich getrennt angeordnet. Weiters ist eine Einrichtung zur Anzeige der Position des Räumschiebers entlang seiner Bewegungsbahn sowie ein Drehmomentsensor vorgesehen, wobei der Drehmomentsensor mit dem Antrieb des Seilzugs gekoppelt ist. Vom Drehmomentsensor wird das zur jeweiligen Position des Räumschiebers am Antrieb wirksame Belastungsdrehmoment festgestellt. Die Steuereinrichtung mit einem Computer speichert eine wegabhängige Drehmomentenkurve und vergleicht die gemessenen Drehmomentsignale mit der Drehmomentenkurve. Die Steuereinrichtung bewirkt ein Abschalten des Antriebs, wenn das gemessene Drehmomentsignal einen von der Drehmomentenkurve abweichenden Spitzenwert anzeigt, der einen voreingestellten Schwellwert überschreitet. Nachteilig dabei sind die Unsicherheit des Betriebs durch unterschiedliche Last- und Reibungsbedingungen beim Räumschieber während dessen Verstellbewegungen und dem damit verbundenen, nicht unerheblichen technischen Aufwand. Ein Abschalten der Verstellbewegung erfolgte erst nach dem Feststellen eines direkten Kontakts mit einem Hindernis, wobei aber diese Hinderniserkennung aufgrund der geringen Lastunterschiede bei Schweinen nicht oder nur schwer möglich war.

Aufgabe der vorliegenden Erfindung war es, die Nachteile des Standes der Technik zu überwinden und eine Verlagerungsanlage zur Verfügung zu stellen, mittels derer mit einem geringeren technischen Aufwand trotzdem ein einfacher und sicherer Betrieb der Verlagerungsanlage durchgeführt werden kann. Weiters soll auch noch eine direkte Kollision von Hindernissen, insbesondere den Tieren, mit dem Verlagerungsschieber minimiert oder überhaupt vermieden werden.

Diese Aufgabe der Erfindung wird durch eine Verlagerungsanlage, insbesondere eine Räumungsanlage und/oder eine Entmistungsanlage, gemäß den Ansprüchen gelöst.

Die Verlagerungsanlage dient insbesondere als Räumungsanlage und/oder Entmistungsanlage für einen Stall mit darin befindlichen Tieren, wobei jener auf dessen Bodenfläche auflagernde Kot der Tiere und gegebenenfalls andere Ablagerungen wie Restfutter, Streumittel oder dergleichen von der Bodenfläche weg zu verlagern oder weg zu verbringen sind. Die Verlagerungsanlage umfasst
- einen Verlagerungsschieber,
- eine Antriebseinheit umfassend
   - zumindest einen Antrieb und
   - eine Antriebssteuerung, welche Antriebssteuerung mit dem zumindest einen Antrieb kommunikationsverbunden ist und zur Steuerung des zumindest einen Antriebs ausgebildet ist, wobei der zumindest eine Antrieb von dem Verlagerungsschieber räumlich getrennt ist,
- zumindest ein Zugmittel, insbesondere ein Seil oder eine Kette, welches zumindest eine Zugmittel einerseits mit dem Verlagerungsschieber und andererseits mit der Antriebseinheit, insbesondere mit dem zumindest einen Antrieb, verbunden ist, wobei der Verlagerungsschieber mittels des Antriebs und des Zugmittels über die Bodenfläche des Stalls entlang eines Verstellwegs hin und her bewegbar ist, und weiters
- eine Erfassungseinheit mit zumindest einem Erfassungsmittel und mit zumindest einem Signalgeber vorgesehen ist, welche Erfassungseinheit an dem Verlagerungsschieber angeordnet ist und das zumindest eine Erfassungsmittel zum berührungslosen und/oder berührungssensitiven Erfassen eines sich im Verstellweg befindlichen Hindernisses (oder der Position des Verlagerungsschiebers) ausgebildet ist, und weiters der Signalgeber dazu eingerichtet ist, im Fall eines berührungslosen Erfassen eines Hindernisses (oder einer Position) vom zumindest einen Erfassungsmittel oder einer Bewegung eines bewegbaren Detektionsteils des Erfassungsmittels aus einer ersten Position in eine entgegen einer Bewegungsrichtung des Verlagerungsschiebers gelegene zweite Position oder einer Verformung eines verformbaren Detektionsteils des Erfassungsmittels ein Steuersignal zu erzeugen,
- eine Funkeinheit mit zumindest einem ersten Funkmodul und zumindest einem zweiten Funkmodul vorgesehen ist,
- der Verlagerungsschieber das zumindest eine erste Funkmodul aufweist,
- das erste Funkmodul mit dem zumindest einen Signalgeber kommunikationsverbunden ist,
- die Antriebssteuerung mit dem zumindest einen zweiten Funkmodul kommunikationsverbunden ist, und darüber hinaus
   - - das erste Funkmodul dazu eingerichtet ist, ein von dem zumindest einen Signalgeber erzeugtes Steuersignal an das zumindest eine zweite Funkmodul zu übertragen, und weiters die Antriebssteuerung dazu eingerichtet ist, den zumindest einen Antrieb anhand des von dem zumindest einen zweiten Funkmodul empfangenen Steuersignals zu steuern.

Der dadurch erzielte Vorteil liegt darin, dass durch das Vorsehen einer Erfassungseinheit mit dem entsprechenden Erfassungsmittel sowie dem Signalgeber, ist es nunmehr einfach möglich, hindernde Gegenstände, die ansonsten eine Verstellbewegung des Verlagerungsschiebers behindern würden, noch vor einer möglichen Kollision mit dem Verlagerungsschieber erfassen oder erkennen zu können. Damit wird auf komplizierte Steuerungs- und Überwachungsmittel verzichtet, welche erst bei der Erhöhung der Antriebsleistung ein vorhandenes Hindernis erfassen oder erkennen können. So wird es möglich, die Verstell- oder Verlagerungsbewegung des Verlagerungsschiebers bereits beim Erkennen oder Erfassen des Hindernisses entsprechend zu steuern, was bis hin zu einem Stillsetzen der Verstellbewegung führen kann. Durch das vorzeitige Erkennen oder Erfassen von Hindernissen mittels der Erfassungseinheit werden so auch Kollisionen oder sogar mögliche Verletzungen von im Verstellweg befindlichen Tieren verhindert.

Weiters kann es vorteilhaft sein, wenn das Erfassungsmittel der Erfassungseinheit zum Erkennen eines Hindernisses zumindest einen Radarsensor und/oder einen Ultraschallsensor und/oder einen optischen Sensor umfasst. Dadurch wird eine exakte Überwachungs- und Erkennungsfunktion ermöglicht, um so nicht nur den unmittelbaren Verstellweg im Bereich der Arbeitsbreite des Verlagerungsschiebers, sondern auch seitlich neben der Arbeitsbreite befindliche Randabschnitte mit in die Überwachung einbeziehen zu können.

Eine andere Ausführungsform zeichnet sich dadurch aus, dass der bewegbare Detektionsteil des Erfassungsmittels zum Erfassen eines Hindernisses zumindest einen stabförmigen Bauteil, wie eine Stange, eine Leiste oder einen Stab, umfasst, welcher zumindest eine stabförmige Bauteil in einer parallelen Ausrichtung bezüglich der Längserstreckung des Verlagerungsschiebers angeordnet ist. Durch die Wahl eines stabförmigen Bauteils (Stange, Leiste, Stab) als bewegbaren Detektionsteil des Erfassungsmittels wird so ein einfaches, sicheres und auf mechanischer Basis beruhendes Erfassungsmittel geschaffen. Dadurch, dass der stabförmige Bauteil erst bei einer relativen Verlagerung desselben bezüglich des Verlagerungsschiebers in Verbindung mit dem Signalgeber ein Signal generiert, kann es so schon vor einem direkten Kontakt des hindernden Gegenstandes mit dem Verlagerungsschieber bereits zu einem ersten vorgelagerten Kontakt des stabförmigen Bauteils mit dem Hindernis kommen. Dadurch wird es möglich, auf sich in innerhalb des Arbeitsbereichs sowie des Verstellwegs befindliche Tiere einen mechanischen Impuls auszuüben und die Tiere damit zum Verlassen des in Richtung des Verstellwegs befindlichen Arbeitsbereichs zu bewegen.

Eine andere Ausführungsform zeichnet sich dadurch aus, wenn der verformbare Detektionsteil des Erfassungsmittels zum Erfassen eines Hindernisses zumindest eine Schaltleiste mit zumindest einer in ihrem Inneren befindlichen Kontaktfläche umfasst. Dadurch kann auf eine mögliche Verschwenkbewegung des Detektionsteils verzichtet werden. Es reicht somit eine Verformung der Schaltleiste bei einem Kontakt mit einem Hindernis zur Abgabe eines Steuersignals an die Funkeinheit aus.

Eine weitere mögliche Ausführungsform hat die Merkmale, dass ein Normalabstand des stabförmigen Bauteils bezüglich einer der Bodenfläche des Stalls zuwendbaren Unterseite des Verlagerungsschiebers einen Wert aufweist, der aus einem Wertebereich stammt, dessen untere Grenze 15 cm und dessen obere Grenze 100 cm, bevorzugt dessen untere Grenze 25 cm und dessen obere Grenze 60 cm, beträgt. Durch die Distanzierung des stabförmigen Bauteils von der Bodenfläche des Stalls kann somit die Auslösung und relative Verlagerung des stabförmigen Bauteils bezüglich des Verlagerungsschiebers auf die Größe von unterschiedlichen Tieren abgestimmt werden. Durch eine ausreichende Distanzierung von der Bodenfläche wird so aber eine ungewollte Abschaltung der Verstellbewegung unterhalb einer vorbestimmten Anhäufung der zu verlagernden Gegenstände verhindert.

Eine weitere Ausbildung sieht vor, dass der zumindest eine stabförmige Bauteil den Verlagerungsschieber in Querrichtung bezüglich der Längserstreckung des Verlagerungsschiebers überragend angeordnet ist. Dadurch wird sichergestellt, dass zuerst ein mechanischer Kontakt des stabförmigen Bauteils mit dem Hindernis erfolgt, bevor es überhaupt zu einem direkten Kontakt des Hindernisses mit dem Verlagerungsschieber kommen kann.

Eine andere Ausführungsform zeichnet sich dadurch aus, dass der zumindest eine stabförmige Bauteil zumindest an jedem in quer zur Bewegungsrichtung voneinander beabstandeten Endabschnitt des Verlagerungsschiebers schwenkbar gelagert ist. Durch die zumindest zweischnittige Lagerung des stabförmigen Bauteils am Verlagerungsschieber kann so die Verstellung und Auslösebewegung noch sicherer gestaltet werden.

Eine weitere bevorzugte Ausführungsform ist dadurch gekennzeichnet, dass zumindest ein Rückstellmittel vorgesehen ist, mittels welchem zumindest einen Rückstellmittel der bewegbare Detektionsteil des Erfassungsmittels, insbesondere der stabförmige Bauteil, von seiner verlagerten zweiten Position selbsttätig in die erste Position zurückverstellt werden kann. Damit kann eine sichere und vor allem selbsttätige Rückstellung des bewegbaren Detektionsteils, insbesondere des stabförmigen Bauteils, zurück in die Ausgangs- oder Arbeitsposition sichergestellt werden. Nach Erreichen der ersten Position kann in weiterer Folge mittels einer Positionsüberwachung der ersten Position die Freigabe für die Fortsetzung oder Wiederaufnahme der Verstellbewegung erfolgen.

Weiters kann es vorteilhaft sein, wenn die Erfassungseinheit ein erstes Erfassungsmittel und einen ersten Signalgeber sowie ein zweites Erfassungsmittel und einen zweiten Signalgeber umfasst, wobei das erste Erfassungsmittel und der erste Signalgeber an einem ersten Längsrandbereich des Verlagerungsschiebers und das zweite Erfassungsmittel und der zweite Signalgeber an einem in Bewegungsrichtung beabstandeten zweiten Längsrandbereich des Verlagerungsschiebers angeordnet sind. Damit wird die Möglichkeit geschaffen, die Verstellbewegung des Verlagerungsschiebers in beide Verstellrichtungen sicher und einfach durchführen zu können.

Eine andere alternative Ausführungsform zeichnet sich dadurch aus, dass bei Verlagerung des Verlagerungsschiebers in seiner Bewegungsrichtung nur jenes Erfassungsmittel und/oder nur jener Signalgeber aktiviert sind oder ist, welche oder welcher in Bewegungsrichtung dem anderen Erfassungsmittel und dem anderen Signalgeber vorgeordnet sind oder ist. Damit kann sichergestellt werden, dass eine unbeabsichtigte Abschaltung der Verstellbewegung durch jenes auf der von der Verstellrichtung abgewendeten Seite des Verstellschiebers befindliche Erfassungsmittel erfolgt.

Eine weitere bevorzugte Ausführungsform ist dadurch gekennzeichnet, dass eine Positionserfassungseinheit vorgesehen ist und die Positionserfassungseinheit zumindest einen am Verlagerungsschieber befindlichen Positionssensor und zumindest einen Positionsmarker umfasst, wobei auch der Positionssensor mit dem ersten Funkmodul kommunikationsverbunden ist und das erste Funkmodul weiters dazu eingerichtet ist, ein vom zumindest einen Positionssensor erzeugtes Positionssignal an das zumindest eine zweite Funkmodul zu übertragen, und dass die Antriebssteuerung weiters dazu eingerichtet ist, den zumindest einen Antrieb anhand des von dem zumindest einen zweiten Funkmodul empfangenen Steuersignals zu steuern oder eine aktuelle Positionsbestimmung durchzuführen. Damit wird die Möglichkeit geschaffen, z.B. die exakte Position zu ermitteln, an welcher sich aktuell der Verlagerungsschieber gerade befindet. Weiters kann aber auch eine exakt vorbestimmte Position entlang des Verstellwegs vom Positionsmarker markiert werden, an welcher für den Verlagerungsschieber bei Erreichen dieser Position eine vorgegebene Aktion ausgelöst wird oder mehrere derselben ausgelöst werden.

Schließlich hat eine weitere mögliche und gegebenenfalls alternative Ausführungsform die Merkmale, dass die Antriebssteuerung eine Schnittstelle umfasst, welche Schnittstelle dazu eingerichtet ist, Betriebsdaten aus zumindest einem Tierhaltungssystem, wie einem Fütterungssystem, einem Einstreusystem, einem Lüftungssystem, zu empfangen und die empfangenen Betriebsdaten in der Antriebssteuerung auszuwerten, und damit den günstigsten Zeitpunkt für den Beginn des Betriebs des Verlagerungsschiebers zu ermitteln und den Antrieb anhand des Ermittlungsergebnisses zu steuern. Durch die zusätzliche Mitberücksichtigung von weiteren Betriebsdaten für den durchzuführenden Verlagerungs- und/oder Räumungsbetrieb kann so ein noch optimalerer und sicherer Betrieb erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Verlagerungsanlage mit Verlagerungsschieber, in Seitenansicht;
- Fig. 2: die Verlagerungsanlage nach Fig.1 in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

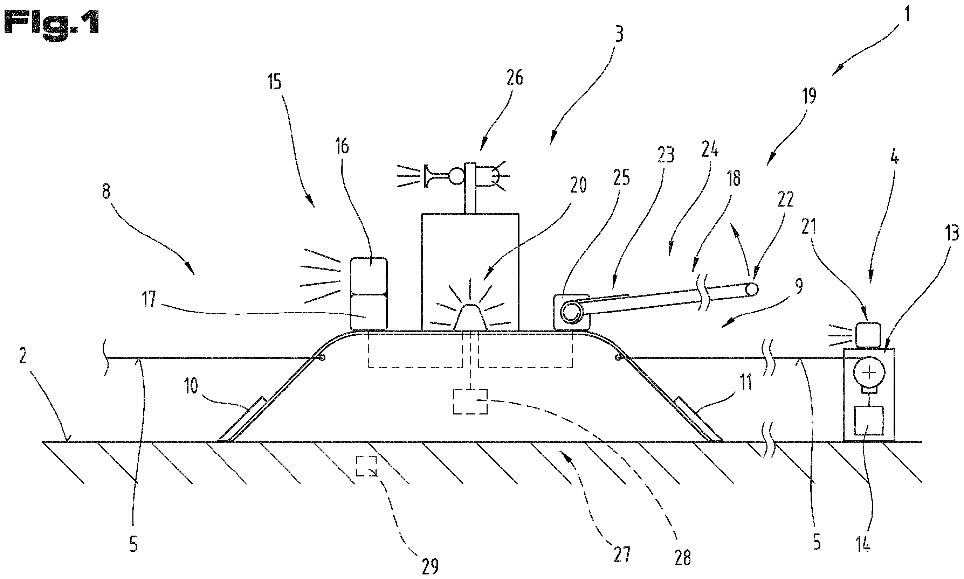

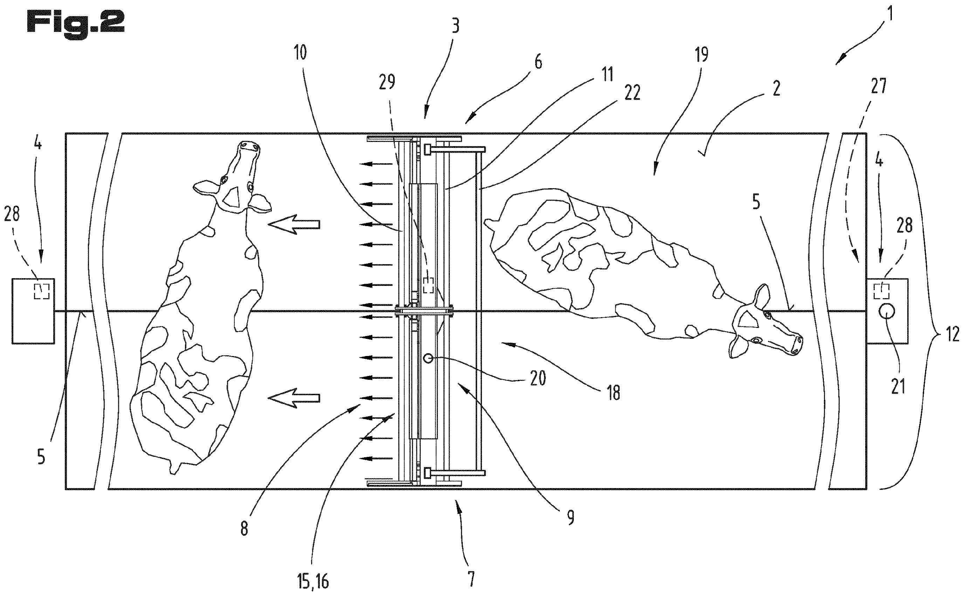

In den Fig. 1 und 2 ist eine mögliche Ausbildung einer Verlagerungsanlage 1 gezeigt, welche auch als Räumungsanlage und/oder Entmistungsanlage bezeichnet werden kann. Die Verlagerungsanlage 1 dient dazu, eine in einem Gebäude befindliche Bodenfläche 2 oder eine andere, gegebenenfalls überdachte Fläche von dort zwischenzeitlich abgelagerten Gegenständen, wie Kot der Tiere, Restfutter, Streumittel oder dergleichen zu befreien und an eine dafür vorgesehene Stelle oder einen Lagerplatz oder einen Zwischenlagerplatz zu verbringen. Bei der Bodenfläche 2 handelt es sich bevorzugt um eine befestigte Planfläche oder einen Spaltboden mit jeweils einer bevorzugt horizontalen Ausrichtung.

Die Verlagerungsanlage 1 umfasst mehrere Anlagen-Komponenten, welche nachfolgend beschrieben und beispielhaft dargestellt werden. So ist hier vorgesehen, dass die Verlagerungsanlage 1 einen Verlagerungsschieber 3, welcher auch als Räumschieber, Entmistungsschieber oder Räumgerät bezeichnet werden kann, eine Antriebseinheit 4 und zumindest ein Zugmittel 5 umfasst. Der Verlagerungsschieber 3 weist in Richtung seiner Längserstreckung einen ersten Endabschnitt 6 und einen davon beabstandeten zweiten Endabschnitt 7 auf. Zwischen den beiden Endabschnitten 6, 7 erstreckt sich im Querschnitt gesehen an einem ersten Längsrandbereich 8 und bevorzugt an einem in Bewegungsrichtung davon beabstandeten zweiten Längsrandbereich 9 jeweils ein eigenes erstes Räumschild 10 und ein zweites Räumschild 11. Der Verlagerungsschieber 3 mit seinen Räumschildern 10, 11 definiert zwischen seinen beiden Endabschnitten 6, 7 eine Arbeitsbreite 12, welche eine normale Ausrichtung bezüglich der vorgesehenen Bewegungsrichtungen des Verlagerungsschiebers 3 aufweist. Der Verlagerungsschieber 3, insbesondere dessen Räumschildern 10, 11, liegt/liegen im Betrieb auf der Bodenfläche 2 auf oder ist/sind unmittelbar oberhalb derselben angeordnet.

Die Antriebseinheit 4 dient zum Übertragen der von einem Antrieb 13 aufgebrachten Zugkraft mittels des Zugmittels 5 auf den Verlagerungsschieber 3. Das Zugmittel 5 kann z.B. durch zumindest ein Seil, eine Kette, ein Zugband, eine Schubstange oder dergleichen gebildet sein. Dazu ist das Zugmittel 5 einerseits mit dem Verlagerungsschieber 3 und andererseits mit der Antriebseinheit 4, insbesondere deren Antrieb 13, verbunden oder gekuppelt. So kann bei in Betrieb befindlichem Antrieb 13 der Verlagerungsschieber 3 mittels des Zugmittels 5 entlang eines bevorzugt geradlinig verlaufenden Verstellwegs über die Bodenfläche 2 des Stalls hin und her beweg werden. Das Zugmittel 5 kann auch versenkt in der Bodenfläche 2, also unterhalb des Bodenniveaus, verlaufend angeordnet sein. In diesem Fall wäre ein nutförmiger Längskanal in der Bodenfläche 2 auszubilden. Es wäre auch noch möglich, in jedem der beiden Endabschnitte 6, 7 jeweils das Zugmittel 5 anzuordnen, wodurch sich im überwiegenden Bereich der Arbeitsbreite 12 des Verlagerungsschiebers 3 keine zusätzlich störenden Komponenten der Verlagerungsanlage 1 befinden.

Die Antriebseinheit 4 umfasst nicht nur den zumindest einen Antrieb 13, sondern kann auch noch eine Antriebssteuerung 14 umfassen, welche vereinfacht angedeutet ist. Die Antriebssteuerung 14 ist ihrerseits mit dem zumindest einen Antrieb 13 kommunikationsverbunden und ist zur Steuerung des zumindest einen Antriebs 13 ausgebildet. Diese Kommunikationsverbindung kann leitungsgebunden und/oder drahtlos ausgebildet sein. Weiters ist der zumindest eine Antrieb 13 von dem Verlagerungsschieber 3 räumlich getrennt angeordnet. So wäre es möglich, nur einen Antrieb 13 vorzusehen und aus dem Zugmittel 5 eine Endlosschlaufe zu bilden. Es könnte aber auch an jedem Endabschnitt des Verstellwegs jeweils ein eigener Antrieb 13 vorgesehen sein und der Verlagerungsschieber 3 entweder von dem einen oder dem anderen Antrieb 13 zur Durchführung der Verlagerungsbewegung oder Räumbewegung gezogen werden.

Zur Vermeidung einer Kollision des vom Zugmittel 5 gezogenen Verlagerungsschiebers 3 umfasst die Verlagerungsanlage 1 noch eine Erfassungseinheit 15, welche ihrerseits zumindest ein Erfassungsmittel 16 und zumindest einen Signalgeber 17. Sind mehrere Erfassungsmittel vorgesehen, werden diese mit einer Zahl (eins, zwei, drei usw.) oder einem Zähler (erstes, zweites, drittes usw.) versehen, wobei dann die zuvor angeführten Erfassungsmittel 16 als erste Erfassungsmittel 16 bezeichnet werden können. Gleiches gilt auch für die Signalgeber 17. Sind mehrere Signalgeber vorgesehen, werden diese ebenfalls mit einem Zähler versehen, wobei dann die zuvor angeführten Signalgeber 17 als erste Signalgeber 17 bezeichnet werden können. Die Erfassungseinheit 15 ist ihrerseits am Verlagerungsschieber 3 angeordnet. Es könnten aber auch mehrere Erfassungsmittel 16 vorgesehen sein, welche jenen Bereich in Bewegungsrichtung des Verlagerungsschiebers 3 erfassen, der dem Verlagerungsschieber 3 vorgeordnet ist. Diese mehreren Erfassungsmittel 16 könnten mit nur einem Signalgeber 17 kommunikationsverbunden sein. Diese Kommunikationsverbindung kann leitungsgebunden und/oder drahtlos ausgebildet sein.

Das Erfassungsmittel 16 kann unterschiedlichst ausgebildet sein und dient zum Erfassen oder zum Erkennen von Hindernissen oder Positionen, welche Hindernisse oder welche Positionen sich bei in Betrieb befindlicher Verlagerungsanlage 1 zumindest innerhalb der Arbeitsbreite des Verlagerungsschiebers 3 sowie in Bewegungsrichtung entlang des Verstellwegs befindlich sind. Bei den Hindernissen handelt es sich zumeist um jene Tiere, welche sich im Stall oder dem dazu vorgesehenen Gebäude oder auf einer zur Räumung vorgesehenen Fläche befinden. In den beiden Fig. 1 und 2 sind als Tiere mehrere Kühe beispielhaft dargestellt. Das Erfassen oder Erkennen des Hindernisses kann berührungslos und/oder berührungssensitiv vom Erfassungsmittel 16 erfolgen, wozu das Erfassungsmittel 16 dazu ausgebildet oder eingerichtet ist.

Der Signalgeber 17 ist dazu eingerichtet oder ausgebildet, im Fall eines berührungslosen Erfassens eines Hindernisses vom zumindest einen Erfassungsmittel 16 ein Steuersignal zu erzeugen oder zu generieren. Der Signalgeber 17 kann aber weiters dazu eingerichtet oder ausgebildet sein, im Fall eines berührungssensitiven Erfassens eines Hindernisses, nämlich einer Bewegung eines bewegbaren Detektionsteils 18 des Erfassungsmittels 16 aus einer ersten Position in eine entgegen einer Bewegungsrichtung des Verlagerungsschiebers 3 gelegene zweite Position, ein Steuersignal zu erzeugen oder zu generieren.

Um eine Übertragung des Steuersignals oder der Steuersignale vom Signalgeber 17 zur Antriebseinheit 4 zu ermöglichen, ist weiters eine Funkeinheit 19 mit zumindest einem ersten Funkmodul 20 und zumindest einem zweiten Funkmodul 21 vorgesehen. Die Funkmodule 20, 21 sind bevorzugt dazu ausgebildet oder eingerichtet, sowohl Signale zu senden als auch Signale zu empfangen. Der Verlagerungsschieber 3 weist das erste Funkmodul 20 auf oder ist mit diesem versehen. Weiters ist das erste Funkmodul 20 mit dem zumindest einen Signalgeber 17 kommunikationsverbunden. Diese Kommunikationsverbindung kann leitungsgebunden und/oder drahtlos ausgebildet sein.

Das zweite Funkmodul 21 befindet sich bevorzugt an oder in der Antriebseinheit 4 und ist mit der dort befindlichen Antriebssteuerung 14 kommunikationsverbunden. Diese Kommunikationsverbindung kann leitungsgebunden und/oder drahtlos ausgebildet sein. Das erste Funkmodul 20 ist dazu eingerichtet oder ausgebildet, ein von dem zumindest einen Signalgeber 17 erzeugtes oder generiertes Steuersignal an das zumindest eine zweite Funkmodul 21 drahtlos zu übertragen. Die Antriebssteuerung 14 ist dazu eingerichtet oder ausgebildet, den zumindest einen Antrieb 13 anhand des von dem zumindest einen zweiten Funkmodul 21 empfangenen Steuersignals zu steuern.

Wurde ein Hindernis oder eine Position erkannt, erfasst oder detektiert, kann z.B. die Antriebsgeschwindigkeit des Antriebs 13 von der Antriebssteuerung 14 reduziert oder die Bewegung überhaupt gestoppt werden. Weiters wäre es auch noch möglich, bei Erfassen eines Hindernisses den Antrieb 13 zu stoppen und den Verlagerungsschieber 3 bezüglich jener vor dem Stoppen durchgeführten Bewegungsrichtung in eine dazu entgegengesetzte Bewegungsrichtung zu verlagern. Der Verstellweg des Verlagerungsschiebers 3 in die entgegengesetzte Bewegungsrichtung kann in etwa bis zu 50 cm betragen. Nachfolgend kann von der Antriebssteuerung 14 der Antrieb 13 wieder auf die ursprüngliche Bewegungsrichtung umgeschaltet werden und der Bewegungsablauf des Verlagerungsschiebers 3 fortgesetzt werden.

Das Erfassungsmittel 16 der Erfassungseinheit 15 zum Erfassen eines Hindernisses kann zumindest einen Radarsensor umfassen oder durch den zumindest einen Radarsensor gebildet sein. Das Erfassungsmittel 16 könnte aber auch auf Basis von Ultraschall, Laser oder anderer optischer Mittel gebildet sein. Gleichfalls könnten aber die zuvor genannten unterschiedlichen Arten der Erfassungsmittel 16 beliebig miteinander kombiniert und/oder auch mehrfach vorgesehen sein.

Es wäre aber auch möglich, dass der bewegbare Detektionsteil 18 des Erfassungsmittels 16 zum Erfassen eines Hindernisses als zumindest ein stabförmiger Bauteil 22 mit einer Längserstreckung bei einer dazu geringeren Diagonalabmessung, wie eine Stange oder eine Leiste, ausgebildet ist. Die Längsausrichtung des zumindest einen länglichen Bauteils 22, nämlich der zumindest einen Stange und/oder der zumindest einen Leiste, erfolgt bevorzugt in einer parallelen Ausrichtung bezüglich der Längserstreckung des Verlagerungsschiebers 3 zwischen seinen beiden voneinander beabstandeten Endabschnitten 6, 7. Der längliche Bauteil 22 umfasst generell jeglichen Gegenstand, der eine Längserstreckung aufweist, die ein Vielfaches einer Diagonalabmessung in normaler Ausrichtung bezüglich der Längserstreckung beträgt, wobei hier auch jegliche Querschnitte darunterfallen. Die Diagonalabmessung ist eine Längsabmessung in der Querschnittsfläche. Weiters kann der längliche Bauteil (Stange, Stab oder Leiste) sowohl als Vollprofil als auch Hohlprofil ausgebildet sein.

Der den Detektionsteil 18 bildende stabförmige Bauteil 22 kann auch als in sich verformbare Schaltleiste ausgebildet sein. Dabei kann es sich um verformbare Gummiteile oder thermoplastische Elastomere handeln, bei welchen in ihrem Inneren zumindest eine Kontaktfläche vorgesehen ist. Wird die Schaltleiste zumindest abschnittsweise verformt, nämlich bei einem körperlichen Kontakt mit einem im Verstellweg befindlichen Hindernis, wird ein Schaltkontakt generiert oder hergestellt und es kann weiters ein Signal ausgegeben werden, um so eine Berührung mit einem Hindernis zu signalisieren.

Um ein sicheres Erfassen oder Erkennen eines sich innerhalb der Arbeitsbreite des Verlagerungsschiebers 3 sowie entlang des vorgesehenen Verstellwegs befindlichen Hindernisses durch das als Stange, Stab oder Leiste ausgebildete Erfassungsmittel 16 zu ermöglichen, ist der stabförmige Bauteil 22 in einem Normalabstand distanziert bezüglich einer der Bodenfläche 2 des Stalls zuwendbaren Unterseite des Verlagerungsschiebers 3 anzuordnen. Der Normalabstand kann einen Wert aufweisen, der aus einem Wertebereich stammt, dessen untere Grenze 15 cm und dessen obere Grenze 100 cm, beträgt. Bevorzugt weist der Normalabstand einen Wert auf, der aus einem Wertebereich stammt, dessen untere Grenze 25 cm und dessen obere Grenze 60 cm beträgt. Damit ist die Stange 22 in Vertikalrichtung gesehen, stets oberhalb der Bodenfläche 2 des Stalls angeordnet. Weiters soll in Bewegungsrichtung des Verlagerungsschiebers 3 gesehen, der zumindest eine stabförmige Bauteil 22 den Verlagerungsschieber 3 in Querrichtung bezüglich der Längserstreckung des Verlagerungsschiebers 3 überragen oder über diesen vorragen. So kann eine ausreichende Distanzierung des Erfassungsmittels 16 vom Verlagerungsschieber 3 erreicht werden und damit eine direkte Kollision des Hindernisses mit dem Verlagerungsschieber 3 gänzlich verhindert oder vermieden werden.

Um eine stabilere Halterung des zumindest einen stabförmigen Bauteils 22 am Verlagerungsschieber 3 zu schaffen, kann der zumindest eine stabförmige Bauteil 22 zumindest an jedem in quer zur Bewegungsrichtung voneinander beabstandeten Endabschnitt 6, 7 des Verlagerungsschieber 3 schwenkbar gelagert sein. Da der stabförmige Bauteil 22 bei einem Kontakt mit einem Hindernis aus seiner ersten Position auf die von der Bodenfläche 2 abgewendete Seite oder Richtung hochgeschwenkt wird, kann zur Rückverlagerung des stabförmigen Bauteils 22 in seine erste Position zumindest ein Rückstellmittel 23 vorgesehen sein. Das Rückstellmittel 23 kann z.B. durch eine Drehfeder, einen Federarm oder dergleichen gebildet sein. Damit kann der bewegbare Detektionsteil 18 des Erfassungsmittels 16, insbesondere die Stange, der Stab oder die Leiste, von seiner verstellten zweiten Position in seine Ausgangsposition oder seine erste Position selbsttätig zurückverstellt werden.

Wie zuvor angedeutet, kann die Erfassungseinheit 15 auch noch ein zweites Erfassungsmittel 24 und einen zweiten Signalgeber 25 umfassen. Damit kann in beide in entgegengesetzter Richtung erfolgende Verstellbewegungen des Verlagerungsschiebers 3 jeweils eine Kollisionsüberwachung mit einem Hindernis durchgeführt werden. In diesem Fall ist nun vorgesehen, dass das erste Erfassungsmittel 16 und der erste Signalgeber 17 am ersten Längsrandbereich 8 oder Längsrandabschnitt des Verlagerungsschiebers 3 und das zweite Erfassungsmittel 24 und der zweite Signalgeber 25 am in Bewegungsrichtung beabstandeten zweiten Längsrandbereich 9 oder Längsrandabschnitt des Verlagerungsschiebers 3 angeordnet sind.

Je nach gewählter Verstellrichtung des Verlagerungsschiebers 3 kann während oder bei einer Verlagerung des Verlagerungsschiebers 3 in seiner Bewegungsrichtung nur jenes Erfassungsmittel 16, 24 und/oder nur jener Signalgeber 17, 25 aktiviert sein, welche oder welcher in Bewegungsrichtung dem anderen Erfassungsmittel 24, 16 und dem anderen Signalgeber 25, 17 vorgeordnet sind oder ist.

Weiters kann die Antriebssteuerung 14 eine Schnittstelle umfassen, welche Schnittstelle dazu eingerichtet ist, Betriebsdaten aus zumindest einem Tierhaltungssystem, wie einem Fütterungssystem, einem Einstreusystem, einem Lüftungssystem, zu empfangen. Die Antriebssteuerung 14 ist dazu eingerichtet oder ausgebildet, die über die Schnittstelle empfangenen Betriebsdaten auszuwerten, und damit den günstigsten Zeitpunkt für den Beginn des Betriebs des Verlagerungsschiebers 3 zu ermitteln. Damit kann der Antrieb 13 anhand des Ermittlungsergebnisses von der Antriebssteuerung 14 gesteuert werden. Weiters wäre es auch noch möglich, erfasste oder detektierte Signale des oder der Signalgeber 17, 25 zeitlich zuordenbar in der Antriebssteuerung abzuspeichern und aus diesen Daten den günstigsten Zeitpunkt oder die günstigste Zeitspanne zu ermitteln und damit den Betrieb des Verlagerungsschiebers 3 dahingehend auszurichten.

Zusätzlich kann auch noch eine Warneinheit 26 vorgesehen sein, welche bei einem Erfassen oder einem Erkennen eines Hindernisses ein Warnsignal generiert. Die Warneinheit 26 kann direkt mit dem Signalgeber 17, 25 der Erfassungseinheit 15 und/oder über die Funkeinheit 19 mit der Antriebssteuerung 14 in Kommunikationsverbindung stehen. Das Warnsignal oder die Warnsignale können solange abgegeben oder generiert werden, bis von der Erfassungseinheit 15 kein sich unmittelbar im Verstellweg befindlicher Gegenstand oder Hindernis mehr erfasst oder erkannt wird. Das Warnsignal kann optisch und/oder akustisch sein. Die Warneinheit 26 kann zumindest einen der zuvor beschriebenen Sensoren (Radarsensor, Ultraschallsensor, optischer Sensor oder dergleichen) umfassen. Weiters könnte aber auch eine Bilderfassungsvorrichtung vorgesehen sein, mittels welcher das zumindest eine sich im Verstellweg befindliche Hindernis erfasst und gegebenenfalls mittels einer Erkennungsvorrichtung das erfasste Bild ausgewertet werden kann.

Zusätzlich wäre es noch möglich, eine Positionserfassungseinheit 27 bei der Verlagerungsanlage 1 vorzusehen. Die Positionserfassungseinheit 27 ist in der Fig. 1 vereinfacht angedeutet und kann zumindest einen Positionssensor 28 zur Erkennung und/oder Erfassung der aktuellen Position des Verlagerungsschiebers 3 bezüglich seines Verstellwegs und zumindest einen Positionsmarker 29 umfassen. Der oder die Positionsmarker 29 kann/können z.B. durch Permanentmagnete und/oder Elektromagnete gebildet sein. Die Anordnung oder Anbringung des oder der Positionsmarker 29 kann z.B. direkt im Werkstoff der Bodenfläche 2 oder in Spalten in der Bodenfläche 2 erfolgen.

In der Fig. 2 ist eine weitere mögliche Ausbildung und Anordnung der Positionserfassungseinheit 27 gezeigt. Es ist dabei vorgesehen, dass bei zumindest einer der Antriebseinheiten 4 der Positionssensor 28 und am Verlagerungsschieber 3 zumindest ein Positionsmarker 29 angeordnet ist. Damit kann z.B. durch die Messung der Stärke des Magnetfeldes die aktuelle Position des Verlagerungsschiebers 3 innerhalb seines bekannten Verstellwegs ermittelt werden. Diese Anwendung kann in ähnlicher oder gleicher Weise erfolgen, wie dies bei Lawinen-Verschütteten-Suchgeräten bekannt ist. Der Positionsmarker 29 bildet den Sender und der Positionssensor 28 den Empfänger

Es kann aber auch zumindest einer der Positionsmarker 29 an einer exakt vordefinierten Stelle oder Position entlang des Verstellwegs angeordnet oder vorgesehen sein. Damit wird es möglich, den Verlagerungsschieber 3 solange entlang seines Verstellwegs zu verlagern oder zu verfahren, bis vom Positionssensor 28 die korrekte Position bezüglich des Positionsmarkers 29 erfasst oder erkannt worden ist. Dieses Positionssignal kann an das erste Funkmodul 20 übertragen oder weitergeleitet werden und von diesem an das zweite Funkmodul 21 gesendet und vom zweiten Funkmodul 21 an die Antriebssteuerung 14 weiter übertragen oder weitergeleitet werden. Dazu sind die entsprechenden Kommunikationsverbindungen zwischen den zuvor beschriebenen Komponenten auszubilden oder herzustellen.

Ist die korrekte Position erkannt oder erfasst worden, kann von der Antriebssteuerung 14 zumindest eine Aktion für den Verlagerungsschieber 3 ausgelöst werden. Die Aktion kann z.B. ein Anhalten der Verstellbewegung, eine Reduzierung der Verstellgeschwindigkeit, eine Erhöhung der Verstellgeschwindigkeit, eine Umkehr der Verstellrichtung oder dergleichen sein.

Weiters kann noch vorgesehen sein, wobei dies nicht mehr näher dargestellt ist, dass oberhalb des Verstellwegs des Verlagerungsschiebers 3, z.B. im Bereich der Decke des Gebäudes, zumindest eine Bilderfassungsvorrichtung (Kamera) und/oder zumindest ein Sensor befindlich angeordnet ist. Die zumindest eine Bilderfassungsvorrichtung (Kamera) und/oder der zumindest eine Sensor kann an einer Führungsanordnung entlang des Verstellwegs verstellbar an dieser gehalten werden. Damit kann mittels einer Antriebsanordnung die zumindest eine Bilderfassungsvorrichtung (Kamera) und/oder der zumindest eine Sensor mit der Verstellbewegung des Verlagerungsschiebers 3 mitbewegt werden. Es wäre auch eine Kopplung mit der Antriebseinheit 4 möglich, um so eine gleichzeitige Verstellbewegung gemeinsam mit dem Verlagerungsschieber 3 durchführen zu können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Verlagerungsanlage
- 2: Bodenfläche
- 3: Verlagerungsschieber
- 4: Antriebseinheit
- 5: Zugmittel
- 6: erster Endabschnitt
- 7: zweiter Endabschnitt
- 8: erster Längsrandbereich
- 9: zweiter Längsrandbereich
- 10: erstes Räumschild
- 11: zweites Räumschild
- 12: Arbeitsbreite
- 13: Antrieb
- 14: Antriebssteuerung
- 15: Erfassungseinheit
- 16: erstes Erfassungsmittel
- 17: erster Signalgeber
- 18: Detektionsteil
- 19: Funkeinheit
- 20: erstes Funkmodul
- 21: zweites Funkmodul
- 22: stabförmiger Bauteil
- 23: Rückstellmittel
- 24: zweites Erfassungsmittel
- 25: zweiter Signalgeber
- 26: Warneinheit
- 27: Positionseinheit
- 28: Positionssensor
- 29: Positionsmarker

## Patentansprüche

1. Verlagerungsanlage (1), insbesondere Räumungsanlage und/oder Entmistungsanlage, für einen Stall zur Verlagerung von auf einer Bodenfläche (2) zwischenzeitlich abgelagerten Gegenständen, wie Kot der Tiere, Restfutter, Streumittel, die Verlagerungsanlage (1) umfasst
- einen Verlagerungsschieber (3),
- eine Antriebseinheit (4) umfassend
- zumindest einen Antrieb (13) und
- eine Antriebssteuerung (14), welche Antriebssteuerung (14) mit dem zumindest einen Antrieb (13) kommunikationsverbunden ist und zur Steuerung des zumindest einen Antriebs (13) ausgebildet ist, wobei der zumindest eine Antrieb (13) von dem Verlagerungsschieber (3) räumlich getrennt ist,
- zumindest ein Zugmittel (5), insbesondere ein Seil oder eine Kette, welches zumindest eine Zugmittel (5) einerseits mit dem Verlagerungsschieber (3) und andererseits mit der Antriebseinheit (4), insbesondere mit dem zumindest einen Antrieb (13), verbunden ist, wobei der Verlagerungsschieber (3) mittels des Antriebs (13) und des Zugmittels (5) über die Bodenfläche (2) des Stalls entlang eines Verstellwegs hin und her bewegbar ist,
**dadurch gekennzeichnet,**
- **dass** eine Erfassungseinheit (15) mit zumindest einem Erfassungsmittel (16, 24) und mit zumindest einem Signalgeber (17, 25) vorgesehen ist, welche Erfassungseinheit (15) an dem Verlagerungsschieber (3) angeordnet ist und das zumindest eine Erfassungsmittel (16, 24) zum berührungslosen und/oder berührungssensitiven Erfassen eines sich im Verstellweg befindlichen Hindernisses ausgebildet ist, und dass der Signalgeber (17, 25) dazu eingerichtet ist, im Fall eines berührungslosen Erfassens eines Hindernisses vom zumindest einen Erfassungsmittel (16, 24) oder einer Bewegung eines bewegbaren Detektionsteils (18) des Erfassungsmittels (16, 24) aus einer ersten Position in eine entgegen einer Bewegungsrichtung des Verlagerungsschiebers (3) gelegene zweite Position oder einer Verformung eines verformbaren Detektionsteils (18) des Erfassungsmittels (16, 24) ein Steuersignal zu erzeugen,
- **dass** eine Funkeinheit (19) mit zumindest einem ersten Funkmodul (20) und zumindest einem zweiten Funkmodul (21) vorgesehen ist,
- **dass** der Verlagerungsschieber (3) das zumindest eine erste Funkmodul (20) aufweist,
- **dass** das erste Funkmodul (20) mit dem zumindest einen Signalgeber (17, 25) kommunikationsverbunden ist,
- **dass** die Antriebssteuerung (14) mit dem zumindest einen zweiten Funkmodul (21) kommunikationsverbunden ist, und
- - dass das erste Funkmodul (20) dazu eingerichtet ist, ein von dem zumindest einen Signalgeber (17, 25) erzeugtes Steuersignal an das zumindest eine zweite Funkmodul (21) zu übertragen, und dass die Antriebssteuerung (14) dazu eingerichtet ist, den zumindest einen Antrieb (13) anhand des von dem zumindest einen zweiten Funkmodul (21) empfangenen Steuersignals zu steuern.

2. Verlagerungsanlage (1) nach Anspruch 1, **dadurch gekennzeichnet, dass** das Erfassungsmittel (16, 24) der Erfassungseinheit (15) zum Erfassen eines Hindernisses zumindest einen Radarsensor und/oder einen Ultraschallsensor und/oder einen optischen Sensor umfasst.

3. Verlagerungsanlage (1) nach Anspruch 1, **dadurch gekennzeichnet, dass** der bewegbare Detektionsteil (18) des Erfassungsmittels (16, 24) zum Erfassen eines Hindernisses zumindest einen stabförmigen Bauteil (22), wie eine Stange, eine Leiste oder ein Stab, umfasst, welcher zumindest eine stabförmige Bauteil (22) in einer parallelen Ausrichtung bezüglich der Längserstreckung des Verlagerungsschiebers (3) angeordnet ist.

4. Verlagerungsanlage (1) nach Anspruch 1, **dadurch gekennzeichnet, dass** der verformbare Detektionsteil (18) des Erfassungsmittels (16, 24) zum Erfassen eines Hindernisses zumindest eine Schaltleiste mit zumindest einer in ihrem Inneren befindlichen Kontaktfläche umfasst.

5. Verlagerungsanlage (1) nach Anspruch 3 oder 4, **dadurch gekennzeichnet, dass** ein Normalabstand des stabförmigen Bauteils (22) bezüglich einer der Bodenfläche (2) des Stalls zuwendbaren Unterseite des Verlagerungsschiebers (3) einen Wert aufweist, der aus einem Wertebereich stammt, dessen untere Grenze 15 cm und dessen obere Grenze 100 cm, bevorzugt dessen untere Grenze 25 cm und dessen obere Grenze 60 cm, beträgt.

6. Verlagerungsanlage (1) nach einem der Ansprüche 3 bis 5, **dadurch gekennzeichnet, dass** der zumindest eine stabförmige Bauteil (22) den Verlagerungsschieber (3) in Querrichtung bezüglich der Längserstreckung des Verlagerungsschiebers (3) überragend angeordnet ist.

7. Verlagerungsanlage (1) nach einem der Ansprüche 3 bis 6, **dadurch gekennzeichnet, dass** der zumindest eine stabförmige Bauteil (22) zumindest an jedem in quer zur Bewegungsrichtung voneinander beabstandeten Endabschnitt (6, 7) des Verlagerungsschiebers (3) schwenkbar gelagert ist.

8. Verlagerungsanlage (1) nach einem der Ansprüche 1, 3, 5 bis 7, **dadurch gekennzeichnet, dass** zumindest ein Rückstellmittel (23) vorgesehen ist, mittels welchem zumindest einen Rückstellmittel (23) der bewegbare Detektionsteil (18) des Erfassungsmittels (16, 24), insbesondere der stabförmige Bauteil (22), von seiner verlagerten zweiten Position selbsttätig in die erste Position zurückverstellt werden kann.

9. Verlagerungsanlage (1) nach einem der vorhergehenden Ansprüche, **dadurch gekennzeichnet, dass** die Erfassungseinheit (15) ein erstes Erfassungsmittel (16) und einen ersten Signalgeber (17) sowie ein zweites Erfassungsmittel (24) und einen zweiten Signalgeber (25) umfasst, wobei das erste Erfassungsmittel (16) und der erste Signalgeber (17) an einem ersten Längsrandbereich (8) des Verlagerungsschiebers (3) und das zweite Erfassungsmittel (24) und der zweite Signalgeber (25) an einem in Bewegungsrichtung beabstandeten zweiten Längsrandbereich (9) des Verlagerungsschiebers (3) angeordnet sind.

10. Verlagerungsanlage (1) nach Anspruch 9, **dadurch gekennzeichnet, dass** bei Verlagerung des Verlagerungsschiebers (3) in seiner Bewegungsrichtung nur jenes Erfassungsmittel (16, 24) und/oder nur jener Signalgeber (17, 25) aktiviert sind oder ist, welche oder welcher in Bewegungsrichtung dem anderen Erfassungsmittel (24, 16) und dem anderen Signalgeber (25, 17) vorgeordnet sind oder ist.

11. Verlagerungsanlage (1) nach einem der vorhergehenden Ansprüche, **dadurch gekennzeichnet, dass** eine Positionserfassungseinheit (27) vorgesehen ist und die Positionserfassungseinheit (27) zumindest einen am Verlagerungsschieber (3) befindlichen Positionssensor (28) und zumindest einen Positionsmarker (29) umfasst, wobei auch der Positionssensor (28) mit dem ersten Funkmodul (20) kommunikationsverbunden ist und das erste Funkmodul (20) weiters dazu eingerichtet ist, ein vom zumindest einen Positionssensor (28) erzeugtes Positionssignal an das zumindest eine zweite Funkmodul (21) zu übertragen, und dass die Antriebssteuerung (14) weiters dazu eingerichtet ist, den zumindest einen Antrieb (13) anhand des von dem zumindest einen zweiten Funkmodul (21) empfangenen Steuersignals zu steuern oder eine aktuelle Positionsbestimmung durchzuführen.

12. Verlagerungsanlage (1) nach einem der vorhergehenden Ansprüche, **dadurch gekennzeichnet, dass** die Antriebssteuerung (14) eine Schnittstelle umfasst, welche Schnittstelle dazu eingerichtet ist, Betriebsdaten aus zumindest einem Tierhaltungssystem, wie einem Fütterungssystem, einem Einstreusystem, einem Lüftungssystem, zu empfangen und die empfangenen Betriebsdaten in der Antriebssteuerung (14) auszuwerten, und damit den günstigsten Zeitpunkt für den Beginn des Betriebs des Verlagerungsschiebers (3) zu ermitteln und den Antrieb (13) anhand des Ermittlungsergebnisses zu steuern.

## Claims

1. A displacement installation (1), in particular a clearing installation and/or a manure removal installation, for a stable for displacing items, such as animal feces, residual feed, bedding material, temporarily stored on a floor surface (2), the displacement installation (1) comprising
- a displacement slider (3),
- a drive unit (4) comprising
- at least one drive (13) and
- a drive control (14), which drive control (14) is communication-connected to the at least one drive (13) and is designed for controlling the at least one drive (13), wherein the at least one drive (13) is spatially separate from the displacement slider (3),
- at least one traction means (5), in particular a rope or a chain, which at least one traction means (5) is connected on one side to the displacement slider (3) and on the other side with the drive unit (4), in particular with the at least one drive (13), wherein the displacement slider (3) can be moved back and forth across the floor surface (2) of the stable along a displacement track by means of the drive (13) and the traction means (5),
**characterized in that**
- a detection unit (15) having at least one detection means (16, 24) and having at least one signal generator (17, 25) is provided, which detection unit (15) is arranged on the displacement slider (3), and the at least one detection means (16, 24) is designed for detecting an obstacle in the displacement track in a touch-free and/or touch-sensitive manner, and that the signal generator (17, 25) is configured to generate a control signal in the case of a touch-free detection of an obstacle by at least one detection means (16, 24) or a movement of a movable detection part (18) of the detection means (16, 24) from a first position into a second position opposite a direction of movement of the displacement slider (3) or a deformation of a deformable detection part (18) of the detection means (16, 24),
- a radio unit (19) having at least one first radio module (20) and at least one second radio module (21) is provided,
- the displacement slider (3) comprises the at least one first radio module (20),
- the first radio module (20) is communication-connected to the at least one signal generator (17, 25),
- the drive control (14) is communication-connected to the at least one second radio module (21), and
- the first radio module (20) is configured to transmit a control signal generated by the at least one signal generator (17, 25) to the at least one second radio module (21), and that the drive control (14) is configured to control the at least one drive (13) based on the control signal received by the at least one second radio module (21).

2. The displacement installation (1) according to claim 1, **characterized in that** the detection means (16, 24) of the detection unit (15) comprises at least one radar sensor and/or an ultrasonic sensor and/or an optical sensor for detecting an obstacle.

3. The displacement installation (1) according to claim 1, **characterized in that** the movable detection part (18) of the detection means (16, 24) comprises at least a rod-shaped component (22), such as a pole, a slat or a rod, for detecting an obstacle, which at least one rod-shaped component (22) is arranged in a parallel orientation with respect to the longitudinal extension of the displacement slider (3).

4. The displacement installation (1) according to claim 1, **characterized in that** the deformable detection part (18) of the detection means (16, 24) comprises at least one switching strip having at least one contact surface located inside it for detecting an obstacle.

5. The displacement installation (1) according to claim 3 or 4, **characterized in that** a normal distance of the rod-shaped component (22) with respect to a bottom side of the displacement slider (3), which bottom side can be made to face the floor surface (2) of the stable, has a value from a value range whose lower limit is 15 cm and whose upper limit is 100 cm, preferably whose lower limit is 25 cm and whose upper limit is 60 cm.

6. The displacement installation (1) according to one of claims 3 to 5, **characterized in that** the at least one rod-shaped component (22) is arranged so as to project beyond the displacement slider (3) in a transverse direction with respect to the longitudinal extension of the displacement slider (3).

7. The displacement installation (1) according to one of claims 3 to 6, **characterized in that** the at least one rod-shaped component (22) is mounted so as to be pivotable at least on each end section (6, 7) of the displacement slider (3) spaced apart from each other transversely to the direction of movement.

8. The displacement installation (1) according to one of claims 1, 3, 5 to 7, **characterized in that** at least one reset means (23) is provided, by means of which at least one reset means (23) the movable detection part (18) of the detection means (16, 24), in particular the rod-shaped component (22), can be moved automatically from its displaced second position back to the first position.

9. The displacement installation (1) according to one of the preceding claims, **characterized in that** the detection unit (15) comprises a first detection means (16) and a first signal generator (17) as well as a second detection means (24) and a second signal generator (25), wherein the first detection means (16) and the first signal generator (17) are arranged at a first longitudinal edge region (8) of the displacement slider (3), and the second detection means (24) and the second signal generator (25) are arranged at a second longitudinal edge region (9) of the displacement slider (3) that is spaced apart from the first in the direction of movement.

10. The displacement installation (1) according to claim 9, **characterized in that** when displacing the displacement slider (3) in its direction of movement, only that detection means (16, 24) and/or only that signal generator (17, 25) are or is activated, which are or is located upstream of the other detection means (24, 16) and the other signal generator (25, 17) in the direction of movement.

11. The displacement installation (1) according to one of the preceding claims, **characterized in that** a position detection unit (27) is provided, and the position detection unit (27) comprises at least one position sensor (28) situated on the displacement slider (3) and at least one position marker (29), wherein the position sensor (28) is also communication-connected to the first radio module (20), and the first radio module (20) is further configured to transmit a position signal generated by the at least one position sensor (28) to the at least one second radio module (21), and that the drive control (14) is further configured to control the at least one drive (13) based on the control signal received by the at least one second radio module (21) or to carry out an up-to-date determination of the position.

12. The displacement installation (1) according to one of the preceding claims, **characterized in that** the drive control (14) comprises an interface, which interface is configured to receive operational data from at least one livestock husbandry system, such as a feeding system, a bedding system, a ventilation system, and to evaluate the received operational data in the drive control (14) and to thereby determine the most favorable point in time for starting the operation of the displacement slider (3) and to control the drive (13) based on the evaluation result.

## Revendications

1. Installation de déplacement (1), plus particulièrement installation de nettoyage et/ou installation d'évacuation de fumier, pour une étable, pour le déplacement d'objets entreposés temporairement sur une surface au sol (2), comme des excréments d'animaux, des restes de nourriture, de la litière, cette installation de déplacement (1) comprenant
- un poussoir de déplacement (3),
- une unité d'entraînement (4) comprenant
- au moins une sortie (13) et
- une commande d'entraînement (14), cette commande d'entraînement (14) étant reliée en communication avec l'au moins une sortie (13) et étant conçue pour le contrôle de l'au moins un entraînement (13), dans lequel l'au moins un entraînement (13) est séparé physiquement du poussoir de déplacement (3),
- au moins un moyen de traction (5), plus particulièrement un câble ou une chaîne, ce moyen de traction (5) étant reliée, d'une part avec le poussoir de déplacement (3) et, d'autre part, avec l'unité d'entraînement (4), plus particulièrement avec l'au moins un entraînement (13), dans lequel le poussoir de déplacement (3) peut être déplacé avec un mouvement de va-et-vient au moyen de l'entraînement (13) et du moyen de traction (5) au-dessus de la surface au sol (2) de l'étable le long d'un trajet de déplacement, **caractérisé en ce que**
- une unité de détection (15), avec au moins un moyen de détection (16, 24) et avec au moins un générateur de signaux (17, 25), est prévu, cette unité de détection (15) étant disposée sur le poussoir de déplacement (3) et l'au moins un moyen de détection (16, 24) étant conçu pour la détection sans contact et/ou tactile d'un obstacle se trouvant dans le trajet de déplacement, et **en ce que** le générateur de signaux (17, 25) est conçu pour générer, dans le cas d'une détection sans contact d'un obstacle par l'au moins un moyen de détection (16, 24) ou d'un mouvement d'une partie de détection mobile (18) du moyen de détection (16, 24) d'une première position vers une deuxième position située à l'encontre d'une direction de mouvement du poussoir de déplacement (3) ou d'une déformation d'une partie de détection déformable (18) du moyen de détection (16, 24), un signal de commande,
- une unité de radio (19), avec au moins un premier module radio (20) et au moins un deuxième module radio (21), est prévue,
- le poussoir de déplacement (3) comprend l'au moins un premier module radio (20),
- le premier module radio (20) est relié en communication avec l'au moins un générateur de signaux (17, 25),
- la commande d'entraînement (14) est reliée en communication avec l'au moins un deuxième module radio (21) et
- le premier module radio (20) est conçu pour transmettre un signal de commande généré par l'au moins un générateur de signaux (17, 25) à l'au moins un deuxième module radio (21), et **en ce que** la commande d'entraînement (14) est conçue pour contrôler l'au moins un entraînement (13) à l'aide du signal de commande reçu par l'au moins un deuxième module radio (21).

2. Installation de déplacement (1) selon la revendication 1, **caractérisée en ce que** le moyen de détection (16, 24) de l'unité de détection (15) pour la détection d'un obstacle comprend au moins un détecteur radar et/ou un détecteur à ultrasons et/ou un détecteur optique.

3. Installation de déplacement (1) selon la revendication 1, **caractérisée en ce que** la partie de détection mobile (18) du moyen de détection (16, 24) pour la détection d'un obstacle comprend au moins un composant en forme de barre (22), comme une tige, une baguette ou une barre, ce composant en forme de barre (22) étant disposé dans une orientation parallèle par rapport à l'extension longitudinale du poussoir de déplacement (3).

4. Installation de déplacement (1) selon la revendication 1, **caractérisée en ce que** la partie de détection mobile (18) du moyen de détection (16, 24) pour la détection d'un obstacle comprend au moins une barre de commutation avec au moins une surface de contact se trouvant à l'intérieur de celle-ci.

5. Installation de déplacement (1) selon la revendication 3 ou 4, **caractérisée en ce qu'**une distance normale entre le composant en forme de barre (22) et un côté inférieur du poussoir de déplacement (3), pouvant être orienté vers la surface au sol (2) de l'étable, présente une valeur qui provient d'une plage de valeurs dont la limite inférieure est de 15 cm et dont la limite supérieure est de 100 cm, de préférence dont la limite inférieure est de 25 cm et dont la limite supérieure est de 60 cm.

6. Installation de déplacement (1) selon l'une des revendications 3 à 5, **caractérisée en ce que** l'au moins un composant en forme de barre (22) est disposé de façon à dépasser du poussoir de déplacement (3) dans une direction transversale par rapport à l'extension longitudinale du poussoir de déplacement (3).

7. Installation de déplacement (1) selon l'une des revendications 3 à 6, **caractérisée en ce que** l'au moins un composant en forme de barre (22) est logé de manière pivotante au moins au niveau de chaque portion d'extrémité (6, 7) du poussoir de déplacement (3) distantes entre elles transversalement par rapport à la direction de déplacement.

8. Installation de déplacement (1) selon l'une des revendications 1, 3, 5 à 7, **caractérisée en ce qu'**au moins un moyen de rappel (23) est prévu, cet au moins un moyen de rappel (23) permettant de réinitialiser la partie de détection mobile (18) du moyen de détection (16, 24), plus particulièrement le composant en forme de barre (22), de sa deuxième position déplacée automatiquement vers la première position.

9. Installation de déplacement (1) selon l'une des revendications précédentes, **caractérisée en ce que** l'unité de détection (15) comprend un premier moyen de détection (16) et un premier générateur de signaux (17) ainsi qu'un deuxième moyen de détection (24) et un deuxième générateur de signaux (25), dans laquelle le premier moyen de détection (16) et le premier générateur de signaux (17) sont disposés sur une première zone de bord longitudinal (8) du poussoir de déplacement (3) et le deuxième moyen de détection (24) et le deuxième générateur de signaux (25) sont disposés sur une deuxième zone de bord longitudinal (9) du poussoir de déplacement (3), distante dans la direction de déplacement.

10. Installation de déplacement (1) selon la revendication 9, **caractérisée en ce que**, lors du déplacement du poussoir de déplacement (3) dans sa direction de déplacement, seul le moyen de détection (16, 24) et/ou seul le générateur de signaux (17, 25) qui est disposé avant l'autre moyen de détection (24, 16) et l'autre générateur de signaux (25, 17) est activé.

11. Installation de déplacement (1) selon l'une des revendications précédentes, **caractérisée en ce qu'**une unité de détection de position (27) est prévue et l'unité de détection de position (27) comprend au moins un détecteur de position (28) se trouvant sur le poussoir de déplacement (3) et au moins un repère de position (29), dans laquelle le détecteur de position (28) est également relié en communication avec le premier module radio (20) et le premier module radio (20) est en outre conçu pour transmettre un signal de position généré par l'au moins un détecteur de position (28) à l'au moins un deuxième module radio (21) et **en ce que** la commande d'entraînement (14) est en outre conçue pour contrôler l'au moins un entraînement (13) à l'aide du signal de commande reçu par l'au moins un deuxième module radio (21) ou pour effectuer une détermination de la position actuelle.

12. Installation de déplacement (1) selon l'une des revendications précédentes, **caractérisée en ce que** la commande d'entraînement (14) comprend une interface, cette interface étant conçue pour recevoir des données de fonctionnement provenant d'au moins un système d'élevage d'animaux, comme un système d'alimentation, un système de litière, un système de ventilation, et pour analyser les données de fonctionnement reçues dans la commande d'entraînement (14) et pour déterminer ainsi le moment approprié pour le début du fonctionnement du poussoir de déplacement (3) et pour contrôler l'entraînement (13) à l'aide du résultat de cette détermination.
